# EUROPEAN PATENT SPECIFICATION

(11) **EP 0 525 790 B1**
(45) Date of publication and mention of the grant of the patent: **09.10.1996**
(21) Application number: 92113089.4
(22) Date of filing: 31.07.1992
(51) Int. Cl.: D21H 27/26, B44C 5/04, D21H 27/02

(54) **Fine dot-like tone decorative laminates**
Dekorative Schichtstoffe mit einem feinen punktierten Effekt
Laminés décoratifs à décor pointillé

(30) Priority: 31.07.1991 JP 214792/91
(43) Date of publication of application: 03.02.1993
(73) Proprietor: KOHJIN CO. Ltd., Minato-ku Tokyo 105 (JP); AICA KOGYO CO., LTD., Nagoya-shi Aichi-ken 460 (JP)
(72) Inventor: Kubota, Yoshikazu, Fujinomiya-shi, Shizuoka-ken (JP); Matsushima, Sunao, Fuji-shi, Shizuoka-ken (JP); Takashima, Shigeo, c/o AICA Kogyo Co.,Ltd., Ama-gun, Aichi-ken (JP); Mitsuhashi, Tsuneo, c/o AICA Kogyo Co.,Ltd, Ama-gun, Aichi-ken (JP); Kamiya, Takashi, c/o AICA Kogyo Co.,Ltd, Ama-gun, Aichi-ken (JP)
(74) Representative: Hansen, Bernd, Dr. Dipl.-Chem.

(56) References cited:
- FR-A- 1 280 066
- US-A- 4 044 185
- DATABASE WPIL Section Ch, Week 8821, Derwent Publications Ltd., London, GB; Class A32, AN 88-143597
- DATABASE WPIL Section Ch, Week 8816, Derwent Publications Ltd., London, GB; Class A94, AN 88-108736
- DATABASE WPIL Section Ch, Week 8823, Derwent Publications Ltd., London, GB; Class A32, AN 84-286187

## Description

### FIELD OF THE INVENTION

The present invention relates to a decorative laminates and, more precisely, to that having a fine dot-like tone appearance. The fine dot-like tone as referred to herein is one to yield an effect of visually admixing fine color dots as the outward appearance of a decorative laminates, and it indicates a delicate tone with different three-dimensional sense, softness and depth as varying in accordance with the direction to see the sheet.

### BACKGROUND OF THE INVENTION

Various decorative laminates are known, which are made of various resins such as melamine resins, diallyl phthalate resins, acrylic resins or polyester resins, and they are widely used in various fields. Constitutions of them are described in detail, for example, in New Reader of Decorative Sheets (published by New Building Materials Research Institute on November 20, 1968) and Handbook of Decorative Sheets (published by New Building Materials Research Institute on October 30, 1973).

For instance, a melamine decorative laminates is roughly grouped into two groups of a high-pressure melamine decorative laminates and a low-pressure (middle-pressure) melamine decorative laminates. As a general constitution, a high-pressure melamine decorative laminates is composed of a dipped over-laying layer of a resin-dipped over-laying paper, a decorative layer of a resin-dipped decorative paper as designed to be bluish, blackish, whitish or grayish in accordance with the use (this is often called a pattern paper or titanium paper), a core layer of a resin-dipped core paper, and a balance sheet layer, as laminated in this order from the outermost surface layer.

In the above-mentioned decorative laminates having a surface layer of a thermosetting resin such as melamine resins, diallyl phthalate resins, acrylic resins or polyester resins, various methods have heretofore been proposed for the purpose of designing the laminated sheet. For instance, a decorative laminates having a surface layer with metallic gloss is disclosed in JP-B 63-22980 and JP-A 63-57232 and 63-84936. (The terms "JP-B" and "JP-A" as used herein mean an "examined Japanese patent publication" and an "unexamined Japanese patent application", respectively.)

The contents of these published or laid-open specifications are roughly as follows:

### (1) JP-B 63-22980

A thermosetting resin decorative laminates with metallic gloss is prepared by using a thick paper (cardboard) containing mica having a particle size of from 10 to 50µm and several pigments, as the surface decorative paper.

### (2) JP-A 63-57232

A high-quality decorative laminates having excellent durability and outward appearance is obtained by coating or impregnating a thermosetting resin containing a metallic gloss-imparting substance on or into the surface of either or both of an over-laying paper to be a surface-protecting layer or a decorative paper prior to integrating lamination of them with a substrate.

### (3) JP-A 63-84936

A decorative laminates with a metallic glossy surface is obtained by printing an over-laying paper or a decorative paper with an ink containing a metallic gloss-imparting substance to be prepared by coating titanium oxide over the surfaces of pearlessence pigments or mica flakes.

However, the decorative laminates which have heretofore been proposed have no design art with a so-called fine dot-like tone.
(1) The decorative laminates as disclosed in JP-B 63-22980 is a so-called non-over-laying type decorative laminates not having an over-laying paper, but a design art with a fine dot-like tone is not applied thereto.
(2) The decorative laminates as disclosed in JP-A 63-57232 is one in which a thermosetting resin containing a gloss-imparting substance has been coated on or impregnated into an over-laying paper or a decorative paper. In the sheet, however, the gloss-imparting substance is not uniformly impregnated into the over-laying layer or decorative layer but is distributed essentially in the surface layer. Therefore, the sheet has a problem that the design thereof is lost due to abrasion.
(3) The decorative laminates as disclosed in JP-A 63-84936 is one in which an ink containing a gloss-imparting substance is coated over an over-laying paper or decorative paper. In the sheet, however, since the gloss-imparting substance is in the surface layer thereof, the sheet also has a problem that the design thereof is lost due to abrasion.

Where only an over-laying paper containing therein a substance capable of yielding a fine dot-like tone is used in preparing a decorative laminates, or where only an ink containing a fine dot-like tone-having substance is coated over an over-laying paper or decorative paper in preparing the same, the design of the sheet would often be lost due to abrasion. Therefore, especially when such a decorative laminates is used on a horizontal plane, the sheet hardly keep the design thereof continuously for a long period of time.

US-A-4 044 185 discloses a decorative paper containing coloring particles having an average particle size of 53 to 210 µm.

FR-A-1 280 066 reveals a decorative paper containing powdery colored fibers having a fiber length of about 20 mm.

### SUMMARY OF THE INVENTION

Under the situation, the object of the present invention is to provide a decorative paper and a decorative laminate comprising a decorative paper having a fine dot-like tone design which is hardly lost even by abrasion.

Specifically, the present invention provides a decorative paper and a decorative laminate, in which a substance capable of yielding a fine dot-like tone has been incorporated into the decorative paper during papermaking thereof.

### DETAILED EXPLANATION OF THE INVENTION

The present invention will be explained in detail hereunder.

Substances of yielding a fine dot-like tone to be used in the present invention are those which may express a fine dot-like tone design in a decorative paper when incorporated thereinto during papermaking of the paper. Where the paper is formed into a decorative laminate, the fine dot-like tone is further augmented on the sheet.

As such substances of yielding a fine dot-like tone, there are mentioned powdery colored fibers as processed to have a mean fiber length of from 50 to 500 µm. In accordance with the use and the intended design art, one or more of them are suitably selected for use in the present invention. Regarding the color of the substances of yielding a fine dot-like tone, one or more different color substances are suitably selected in accordance with the use and the intended design art.

Powdery colored fibers of yielding a fine dot-like tone for use in the present invention are ones to be obtained by powdering colored fibers by cutting, grinding or dry-powdering. Any of them having a mean fiber length of from 50 to 500 µm can be used in the present invention. Colored fibers having a size of from 3 to 30 denier, preferably from 10 to 20 denier are used.

Since powdery colored fibers as colored with dyes have poor weather resistance, those as spinning colored or dope-dyed with pigments are preferred. For instance, preferred are dope-pigmented powdery rayon fibers or powdery pulp fibers as colored with pigments followed by treatment with a melamine resin or the like to make them water-proof.

For making a decorative paper into which such substance of yielding a fine dot-like tone has been incorporated thereinto during papermaking, any known papermaking method may be employed. The amount of the fine dot-like tone-yielding substance to be added thereto may be approximately from 0.1 to 150% by weight to pulp, generally approximately from 80 to 100 % by weight thereto, depending upon the intended design art. If several different colored fibers are mixed, the design art would be further enhanced. Titanium oxide may be added to the decorative paper so as to impart a light-shielding property thereto; and the amount of such titanium oxide to be added thereto may be approximately from 10 to 50 % by weight to pulp, depending upon the amount of the fine dot-like tone-imparting substance to be added. The weight of the decorative paper may be generally from 50 to 150 g/ **m**^{**2**}. Natural pulps such as wood pulp, Manila hemp pulp and others which contain a high rate of α-cellulose are used. As wood pulp, either tree pulp, a needle-leaf tree pulp or broadleaf tree pulp, can be used. The trees are pulped by a soda process, kraft process and SP (sulphate pulp) process. The thermosetting resin to be impregnated into the decorative paper is not also specifically defined. For instance, one or more to be selected from melamine resins, diallyl phthalate resins, acrylic resins and polyester resins may be used.

For forming the thermosetting resin decorative laminates of the present invention, any known materials may be used and may be formed into the sheet by any known hot-pressing method. That is, the decorative paper of the present invention can be applied to any and every decorative laminates having a decorative paper. In order to impart any auxiliary design art to the decorative laminates of the present invention, the decorative paper and/or the over-laying paper of constituting the sheet may be optionally printed; or an over-laying paper containing fine dot-like tone-imparting substance therein may be laminated over the decorative paper containing fine dot-like tone-imparting substance therein.

The following examples are intended to illustrate the present invention more concretely, which, however, are not intended to restrict the scope of the present invention.

### EXAMPLE 1

80 % by weight to pulp (NBKP/LBKP = 40/60) of 0.2 mm-cut dope-dyed rayon (Cellcolor, trade name by Kohjin Co.; brownish color, 15 denier) and 30 % by weight to pulp of titanium oxide, which is for light-shielding, were incorporated into paper stock and made into a decorative paper having a weight of 85 g/ **m**^{**2**} and having a brownish fine dot-like tone by a known papermaking method. Fixation of the dope-dyed rayon during papermaking was good, and it was uniformly dispersed in the decorative paper formed.

Next, a melamine resin was impregnated into the decorative paper in an amount of 130 % by weight to the paper to give a melamine resin-impregnated decorative paper.

75 % by weight of a phenolic resin was impregnated into a non-bleached kraft paper (190 g/ **m**^{**2**}) to prepare a phenolic resin-impregnated core paper. Five sheets of the core paper were laminated to form a core layer. By an ordinary melamine decorative laminates preparing method, the above-mentioned melamine resin-impregnated decorative paper, the above-mentioned phenolic resin-impregnated core layer (composed of five sheets of core paper) and a melamine resin-impregnated balance sheet, which is generally used for prevention of warping, were laminated in this order from the outermost surface of the laminate, and these were subjected to integrating hot-pressing with a hot presser by an ordinary method to form a melamine decorative laminates of the present invention. The melamine decorative laminates had a fine dot-like tone design. Since a substance of yielding a fine dot-like tone was incorporated into the decorative paper during papermaking, the decorative laminates kept the excellent fine dot-like tone design for a long period of time even after the surface of the sheet worn away.

### EXAMPLE 2

60 % by weight to pulp (NBKP/LBKP = 40/60) of 0.2 mm-cut dope-dyed rayon (Cellcolor, trade name by Kohjin Co.; grayish color, 15 denier) was incorporated into paper stock and formed into an over-laying paper having a weight of 60 g/ **m**^{**2**} by an ordinary papermaking method. 150 % by weight of a melamine resin was impregnated into the over-laying paper to give a resin-impregnated over-laying paper.

On the other hand, 80 % by weight to pulp of 0.2 mm-cut dope-dyed rayon (Cellcolor, trade name by Kohjin Co.; grayish color, 15 denier) and 30 % by weight to pulp of titanium oxide, which is for light-shielding, were incorporated into paper stock and made into a decorative paper having a weight of 85 g/ **m**^{**2**} and having a grayish fine dot-like tone by a known papermaking method. Fixation of the dope-dyed rayon during papermaking was good, and it was uniformly dispersed in the decorative paper formed.

Next, a melamine resin was impregnated into the decorative paper in an amount of 140 % by weight to the paper to give a resin-impregnated decorative paper.

75 % by weight of a phenolic resin was impregnated into a non-bleached kraft paper (190 g/ **m**^{**2**}) to prepare a phenolic resin-impregnated core paper. Five sheets of the paper were laminated to form a core layer. By an ordinary melamine decorative laminates preparing method, the above-mentioned melamine resin-impregnated over-laying paper, the above-mentioned melamine resin-impregnated decorative paper, the above-mentioned phenolic resin-impregnated core layer (composed of five sheets of core paper) and a melamine resin-impregnated balance sheet, which is generally used for prevention of warping, were laminated in this order from the outermost suface of the laminate, and these were subjected to integrating hot-pressing with a hot presser by an ordinary method to form a melamine decorative laminates of the present invention.

The melamine decorative laminates had an excellent fine dot-like tone design. Since a substance of yielding a fine dot-like tone was incorporated into both the over-laying paper and the decorative paper during papermaking and of constituting the decorative laminates and the sheet had the over-laying layer, the sheet had excellent abrasion resistance. Even after the over-laying layer of the sheet had worn away, the sheet still kept the excellent fine dot-like tone design for a long period of time as the decorative paper layer of the sheet had the fine dot-like tone design.

### EXAMPLE 3

40 % by weight to pulp (NBKP/LBKP = 40/60) of 0.1mm-cut dope-dyed rayon (Cellcolor, trade name by Kohjin Co.; brownish color, 15 denier) and 40 % by weight to pulp of 0.5 mm-cut dope-dyed rayon (Cellcolor, trade name by Kohjin Co.; grayish color, 15 denier) and 30 % by weight to pulp of titanium oxide, which is for light-shielding, were incorporated into paper stock and made into a decorative paper having a weight of 85 g/ **m**^{**2**} and having brownish and grayish mixed fine dot-like tone by a known papermaking method. Fixation of the dope-dyed rayon during papermaking was good, and it was uniformly dispersed in the decorative paper formed.

Next, a melamine resin was impregnated into the decorative paper in an amount of 130 % by weight to the paper to give a melamine resin-impregnated decorative paper.

75 % by weight of a phenolic resin was impregnated into a non-bleached kraft paper (190 g/ **m**^{**2**}) to prepare a phenolic resin-impregnated core paper. Five sheets of the core paper were laminated to form a core layer. By an ordinary melamine decorative laminates preparing method, the above-mentioned melamine resin-impregnated decorative paper, the above-mentioned phenolic resin-impregnated core layer (composed of five sheets of core paper) and a melamine resin-impregnated balance sheet, which is generally used for prevention of warping, were laminated in this order from the outermost surface of the laminate, and these were subjected to integrating hot-pressing with a hot presser by an ordinary method to form a melamine decorative laminates of the present invention. The melamine decorative laminates had a fine mixed dot-like tone design.

Since a substance of yielding a fine mixed dot-like tone was incorporated into the decorative paper during papermaking, the decorative laminates kept the excellent fine dot-like tone design for a long period of time even after the surface of the laminates worn away.

As explained in detail in the above, since the decorative laminates of the present invention contains a particular substance which yields a fine dot-like tone when incorporated into the constitutive decorative paper during papermaking and which yields a further excellent fine dot-like tone when the paper is formed into a decorative laminates, it has an excellent fine dot-like tone design.

In addition, since the substance of yielding a fine dot-like tone is incorporated into the decorative paper of constituting the decorative laminates of the present invention during papermaking of the paper, the fine dot-like tone is hardly lost even after the surface of the decorative laminates has worn away so that the sheet may keep the excellent design for a long period of time.

While the invention has been described in detail and with reference to specific embodiments thereof, it will be apparent to one skilled in the art that various changes and modifications can be made therein without departing from the scope thereof as defined in the appended claims.

## Claims

1. A decorative paper having a fine dot-like tone appearance, which contains powdery colored fibers having a mean fiber length of from 50 to 500 µm as incorporated thereinto during papermaking.

2. The decorative paper as claimed in claim 1, in which the colored fibers are those of one or more of dope-dyed rayons.

3. The decorative paper as claimed in claim 1, in which the colored fibers are synthetic fibers as pigmented with color pigment(s).

4. The decorative paper as claimed in claim 1, in which the colored fibers are those of from 3 to 30 denier.

5. The decorative paper as claimed in claim 4, in which the colored fibers are those of from 10 to 20 denier.

6. The decorative paper as claimed in claim 1, in which the content of the colored fibers in the paper stock of the decorative paper is from 0.1 to 150% by weight relative to the weight of the pulp.

7. The decorative paper as claimed in claim 6, in which the content of the colored fibers in the paper stock of the decorative paper is from 80 to 100% by weight relative to the weight of the pulp.

8. The decorative paper as claimed in claim 1, in which the decorative paper is one having a weight of from 50 to 150 g/m².

9. A decorative laminate having a fine dot-like tone appearance comprising a decorative paper as defined in any of the claims 1 to 8.

## Patentansprüche

1. Ein dekoratives, eine feine punktartige Tönung zeigendes, Papier, welches pulverförmige gefärbte Fasern mit einer mittleren Faserlänge zwischen 50 und 500 µm enthält, die während der Papierherstellung in dieses eingebracht worden sind.

2. Das dekorative Papier, wie es im Anspruch 1 beansprucht ist, in welchem die gefärbten Fasern solche von einem oder mehreren düsengefärbten Rayons sind.

3. Das dekorative Papier, wie es im Anspruch 1 beansprucht ist, in welchem die gefärbten Fasern synthetische Fasern sind, die mit einem Farbpigment beziehungsweise Farbpigmenten pigmentiert sind.

4. Das dekorative Papier, wie es im Anspruch 1 beansprucht ist, in welchem die gefärbten Fasern solche mit 3 bis 30 den sind.

5. Das dekorative Papier, wie es im Anspruch 4 beansprucht ist, in welchem die gefärbten Fasern solche mit 10 bis 20 den sind.

6. Das dekorative Papier, wie es im Anspruch 1 beansprucht ist, in welchem der Anteil der gefärbten Fasern in dem Papierrohstoff des dekorativen Papiers - bezogen auf das Gewicht der Pulpe - zwischen 0,1 und 150 Gew.-% liegt.

7. Das dekorative Papier, wie es im Anspruch 6 beansprucht ist, in welchem der Anteil der gefärbten Fasern in dem Papierrohstoff des dekora-tiven Papiers - bezogen auf das Gewicht der Pulpe - zwischen 80 und 100 Gew.-% liegt.

8. Das dekorative Papier, wie es im Anspruch 1 beansprucht ist, in welchem das dekorative Papier eines ist, das ein Gewicht zwischen 50 und 150 g/m² hat.

9. Ein dekoratives eine feine punktartige Tönung zeigendes Laminat, welches ein dekoratives Papier beinhaltet, wie es in irgendeinem der An-sprüche 1 bis 8 definiert ist.

## Revendications

1. Papier décoratif ayant l'aspect d'une nuance analogue à un pointillé fin, qui contient des fibres colorées pulvérulentes ayant une longueur moyenne des fibres de 50 à 500 µm à l'état incorporé pendant la fabrication du papier.

2. Papier décoratif selon la revendication 1, dans lequel les fibres colorées sont celles d'une ou de plusieurs rayonnes teintées dans la masse.

3. Papier décoratif selon la revendication 1, dans lequel les fibres colorées sont des fibres synthétiques pigmentées avec un ou plusieurs pigments de couleur.

4. Papier décoratif selon la revendication 1, dans lequel les fibres colorées présentent un denier de 3 à 30.

5. Papier décoratif selon la revendication 4, dans lequel les fibres colorées présentent un denier de 10 à 20.

6. Papier décoratif selon la revendication 1, dans lequel la teneur en fibres colorées dans le papier raffiné du papier décoratif est de 0,1 à 150 % en poids par rapport au poids de la pulpe.

7. Papier décoratif selon la revendication 6, dans lequel la teneur en fibres colorées dans le papier raffiné du papier décoratif est de 80 à 100 % en poids par rapport au poids de la pulpe.

8. Papier décoratif selon la revendication 1, dans lequel le papier décoratif est un papier ayant un poids de 50 à 150 g/m².

9. Stratifié décoratif ayant l'aspect d'une nuance analogue à un pointillé fin comprenant un papier décoratif tel que défini dans l'une quelconque des revendications 1 à 8.
